# FASCICULE DE BREVET EUROPEEN

(11) **EP 2 451 711 B1**
(45) Date de publication et mention de la délivrance du brevet: **04.05.2016**
(21) Numéro de dépôt: 10729891.1
(22) Date de dépôt: 08.07.2010
(51) Int. Cl.: F42B 15/38, B64G 1/64

(54) **DISPOSITIF DE SÉPARATION LINÉAIRE DOUCE D'UNE PREMIÈRE PIÈCE ET D'UNE SECONDE PIÈCE**
VORRICHTUNG ZUR SANFTEN LINAREN TRENNUNG EINES ERSTEN UND ZWEITEN TEILS
DEVICE FOR GENTLE LINEAR SEPARATION OF A FIRST PART AND A SECOND PART

(30) Priorité: 09.07.2009 FR 0954777
(43) Date de publication de la demande: 16.05.2012
(73) Titulaire: Airbus Defence and Space SAS, 78130 Les Mureaux (FR)
(72) Inventeur: BEHAR, Jacques, F-33160 Saint Médard en Jalles (FR)
(74) Mandataire: Ilgart, Jean-Christophe
(86) Numéro de dépôt international: PCT/EP2010/059776
(87) Numéro de publication internationale: WO 2011/003965

(56) Documents cités:
- EP-A1- 0 481 888
- WO-A1-2004/046568
- FR-A1- 2 685 399
- JP-A- 2 216 398
- US-A- 4 753 465
- US-A- 5 312 152
- US-A1- 2004 231 933

## Description

### DOMAINE TECHNIQUE

L'invention concerne un dispositif de séparation linéaire douce d'une première pièce et d'une seconde pièce, la première pièce étant liée à la seconde pièce, comportant une source thermique appliquée sur la première pièce qui applique un stimulus thermique à la première pièce, de manière à désolidariser la première pièce de la seconde pièce par une déformation thermique de la première pièce.

On trouve de tels ensembles liés mécaniquement dans les lanceurs spatiaux (séparation d'étages, de charge utile), les missiles, les sondes spatiales ou même les avions (largage de charge utile).

Ces applications se caractérisent par le fait qu'on a besoin de séparer des objets qui peuvent être fragiles, par exemple un satellite, et dont la liaison a eu à subir des charges mécaniques élevées, comme lors des phases propulsées d'un lanceur.

Parmi les dispositifs de séparation actuellement connus, on distingue les liaisons ponctuelles, par exemple les boulons explosifs, et les liaisons linéaires. L'invention concerne plus particulièrement un dispositif de séparation de ce dernier type.

Des liaisons linéaires mécaniques ont déjà été proposées, par exemple dans le document FR 2 839 550. Toutefois, la plupart des solutions appliquées aux liaisons linéaires est de nature pyrotechnique, comme décrit par le document FR 2 861 691, qui est considéré comme l'art antérieur le plus proche et décrit les caractéristiques du préambule de la revendication 1.

. On utilise un cordeau pyrotechnique qui, lors de son inflammation, crée une surpression qui déforme et casse la zone de rupture choisie. Il y a un effet pyrotechnique avec génération d'un choc souvent violent.

Nécessairement, toutes les solutions avec rupture pyrotechnique provoquent des ondes de chocs très importantes néfastes au lanceur et à sa charge utile au point que l'on a dû mettre en place parfois des systèmes complémentaires d'amortissement de chocs, comme dans le document FR 2 861 691.

On connaît également des séparations mécaniques douces, comme dans les documents du brevet US 4 753 465, US 5 312 152 ou encore FR 2 685 399. Cependant, ces dispositifs de séparation ne sont pas linéaires. Ils sont ponctuels du type vis-écrou. Leur dimension est zéro.

L'invention a par conséquent pour objet un dispositif et un procédé de séparation linéaire douce permettant par exemple la séparation d'étages de lanceurs et limitant les chocs sur le lanceur et sur sa charge utile.

Ces buts sont atteints, conformément à l'invention, par le fait la première pièce est liée linéairement selon une ligne à la seconde pièce et par le fait que la source thermique est appliquée linéairement selon une ligne sur la première pièce.

Grâce a ces caractéristiques, on obtient une liaison le long d'une ligne, par exemple le long d'une droite ou d'un cercle. La liaison est linéaire. Sa dimension est un. Elle permet d'attacher deux cylindres. Elle s'applique à la séparation d'étages de fusées.

De préférence, la source thermique est placée dans une cavité étanche aux gaz possédant des côtés comportant une isolation thermique sur au moins deux côtés de la cavité.

De préférence encore, l'isolation thermique est faite avec des matériaux à diffusivité la plus faible possible, la diffusivité étant la grandeur λ/ρ.Cₚ dans laquelle λ est la conductivité du matériau ; ρ sa masse volumique et Cₚ sa capacité calorifique.

L'isolation thermique est réalisée par exemple en mica ou en Prosial^{®}.

La source thermique est par exemple une composition chimique chauffante.

La composition chimique chauffante est par exemple une Thermite commerciale ayant un pouvoir calorifique au moins égal à 850 cal/g.

Avantageusement, la désolidarisation de la première pièce de la seconde pièce s'effectue en une durée inférieure à 10 secondes et de préférence inférieure à 3 secondes.

Dans une réalisation particulière, la première pièce est une pièce de révolution et la seconde pièce est un cylindre lié linéairement à la première pièce par des pions espacés l'un de l'autre, par collage démontable ou par brasure.

Avantageusement, la première pièce comporte des entures destinées à faciliter sa déformation.

L'invention concerne par ailleurs un procédé de séparation linéaire douce d'une première pièce d'une seconde pièce, la première pièce étant liée linéairement à la seconde pièce. Ce procédé comporte les étapes successives suivantes :
- on applique une source thermique sur la première pièce ;
- on chauffe la première pièce au moyen de la source thermique de manière à la déformer thermiquement et à la désolidariser de la seconde pièce.

De préférence, selon le procédé, la première pièce est une pièce de révolution et la seconde pièce est un cylindre lié linéairement à la première pièce par des pions espacés l'un de l'autre, par collage démontable ou par brasure.

Le dispositif de l'invention s'applique aux lanceurs spatiaux, aux sondes spatiales, aux satellites, aux missiles.

D'autres caractéristiques et avantages de la présente invention apparaîtront encore à la lecture de la description qui suit d'un exemple de réalisation donné à titre illustratif en référence aux figures annexées. Sur ces figures :
- la figure 1 est une vue en coupe d'un exemple d'une architecture d'une liaison séparable conforme à la présente invention ;
- la figure 2 est une vue en élévation du dispositif représenté sur la figure 1 ;
- la figure 3 est une vue en perspective du dispositif des figures 1 et 2 ;
- la figure 4 est une vue de détail en coupe de l'isolation de la cavité où se trouve la source thermique.

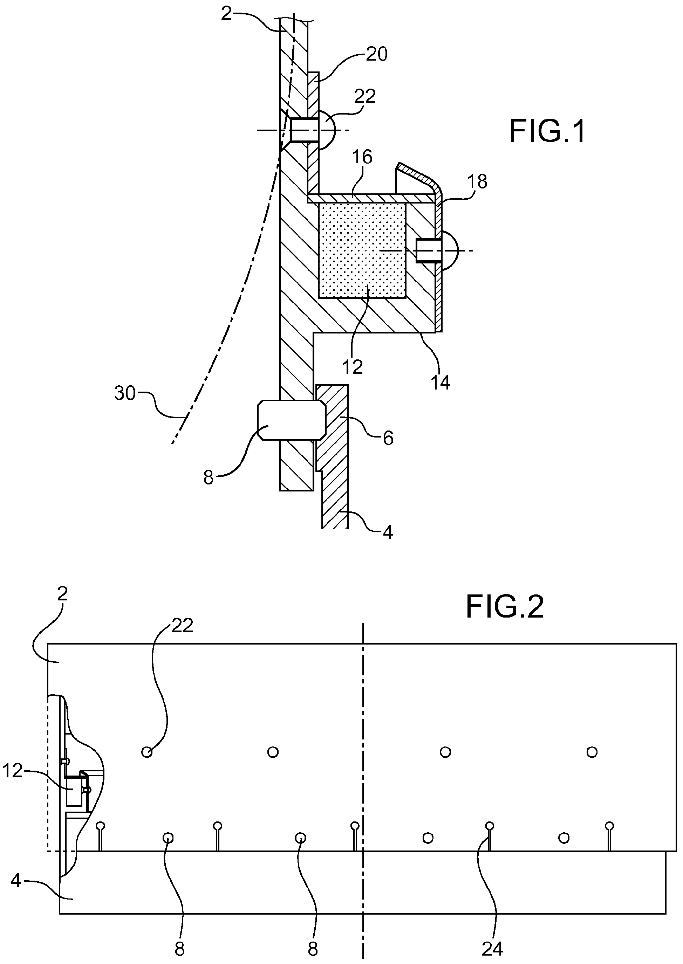

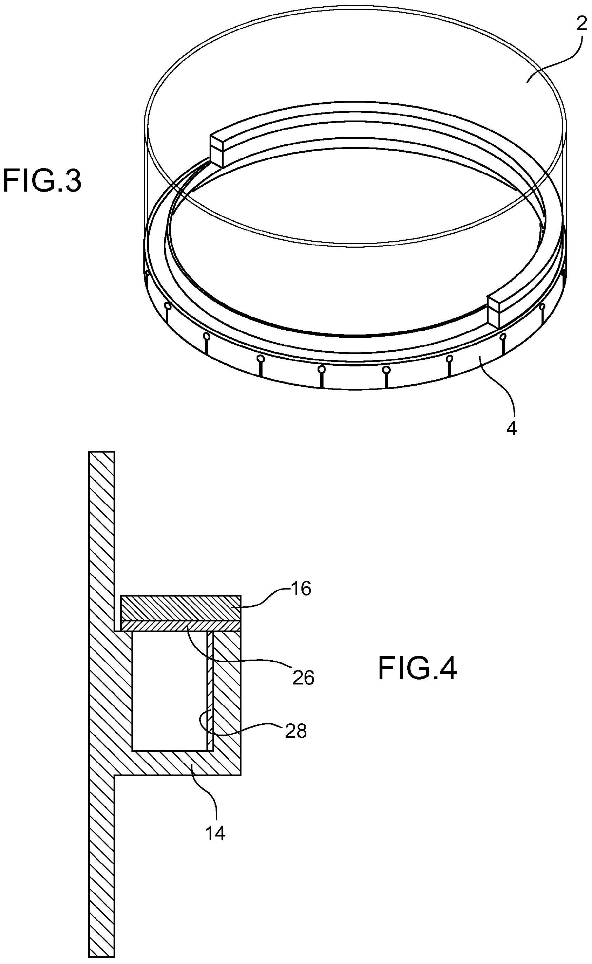

Sur la figure 1, la référence 2 désigne une première pièce et la référence 4 désigne une seconde pièce. La première pièce 2 et la seconde pièce 4 sont liées mécaniquement l'une à l'autre dans une zone de liaison à séparer 6. Dans l'exemple de réalisation décrit, la zone de liaison est constituée par des pions 8 solidaires de la seconde pièce 4 qui s'engagent dans des trous correspondants de la première pièce 2. A la place des pions 8, on peut prévoir des vis, des rivets, ou tout autre moyen de fixation approprié. Comme on peut le voir plus particulièrement sur la figure 3, la première pièce 2 et la seconde pièce 4 sont des pièces de révolution.

Conformément à l'invention, une source thermique 12 est appliquée sur la première pièce 2. La source thermique 12 est par exemple une Thermite commerciale. La source thermique est logée à l'intérieur d'une rainure 14 solidaire de la première pièce 2. La rainure 14 est fermée par une tôle de fermeture 16 annulaire. La tôle 16 est par exemple réalisée en acier inoxydable d'épaisseur 2 mm. La tôle 16 est maintenue par une tôle 18 repliée à son extrémité. La tôle 18 est par exemple une tôle en acier inoxydable d'épaisseur 1 mm. Une tôle 20, fixée sur la première pièce 2 par des rivets 22 est en appui sur la tôle de fermeture 16. La tôle 20 est par exemple une tôle en aluminium de 2 mm d'épaisseur.

On a représenté sur la figure 2 une vue en élévation du dispositif représenté sur la figure 1. Cette figure fait apparaître l'emboîtement de la seconde pièce 4 dans la première pièce 2. Un écorché, sur la gauche de la figure, montre la source thermique 12 appliquée sur la première pièce.

On remarque également sur la figure 2 que la première pièce 2 comporte des entures 24 destinées à faciliter sa déformation lors du stimulus thermique.

La source thermique 12 est par exemple une Thermite commerciale ayant un pouvoir calorifique au moins égal à 850 cal/g. La Thermite est allumée avec des initiateurs du marché. Ces initiateurs sont soit mélangés à la Thermite en proportion d'une part d'initiateurs en masse pour 3 à 4 parts de Thermite, soit placés dans la rainure de façon adjacente à la Thermite dans la même proportion. L'ensemble Thermite/initiateur est lui-même mis à feu avec des initiateurs, par exemple des initiateurs électriques d'artifice. Le nombre d'initiateurs électriques nécessaires dépend de la longueur de la zone de séparation.

La cavité dans laquelle est logée la source thermique est isolée thermiquement au moins sur deux côtés de façon à ce que le flux thermique soit orienté dans la direction souhaitée. On a représenté sur la figure 4, une vue de détaillée en coupe de l'isolation de la cavité où se trouve la source thermique. La cavité est isolée à sa partie haute et à sa partie droite de manière à ce que le flux thermique soit dirigé vers le bas et vers la gauche de la cavité. La plaque d'acier inoxydable 16 est doublée par une couche de Prosial^{®} 26 et la rainure 14 est isolée, sur sa partie droite, selon la figure, par exemple par une feuille de mica 28. L'isolation thermique procurée par la couche de Prosial^{®} et la feuille de mica a pour fonction de privilégier l'échauffement rapide de la pièce 2 vers la zone de liaison 6.

Le fonctionnement du dispositif de l'invention est le suivant. La séparation est initiée par un échauffement rapide de la première pièce 2. Cela signifie que l'on est en régime thermique transitoire, avec des variations de température fortes qui sont à la base du principe du fonctionnement de l'invention. Une conséquence de ces inhomogénéités thermiques est que la première pièce 2 se déforme comme représenté par la déformée 30 sur la figure 1 car sa face droite est plus près de la source de chaleur que sa face gauche. De ce fait, la zone de liaison à séparer 6 est sollicitée dans un sens convenable. En d'autres termes, à l'apparition du stimulus thermique, la première pièce 2 et la pièce inférieure 4 s'écartent effectivement. Il en est ainsi par ce que la zone de liaison à séparer est du côté de la face chaude de la première pièce 1 qui est sollicitée par la composition chauffante 12. Il s'agit là d'une condition indispensable du fonctionnement de l'invention. En effet, si la zone de liaison à séparer était du côté de la face froide de la pièce sollicitée 1 par la composition thermique chauffante 12, il n'y aurait non pas écartement des pièces à séparer mais serrage donc frettage et la séparation serait impossible.

Cette isolation est faite avec des matériaux à diffusivité la plus faible possible, la diffusivité étant la grandeur λ/ρ.Cₚ. λ est la conductivité du matériau, ρ sa masse volumique et Cₚ sa capacité calorifique. Cette diffusivité caractérise la capacité d'un isolant de limiter les transferts de chaleur en régime transitoire.

On notera également que la cavité doit être étanche aux gaz pour qu'un fonctionnement correct soit assuré.

On a représenté, sur la figure 1, une liaison mécanique par piontage 8. Toutefois, la liaison peut également être réalisée par d'autres moyens, par exemple par collage ou par brasage. Les liaisons par brasage utilisent avantageusement des matériaux à bas point de fusion. La liaison par collage peut utiliser de préférence le procédé de collage INDAR à décollement commandé de la société Rescoll.

Avec une géométrie de liaison telle que définie dans l'invention, pour une masse de Thermite de 1,1 g/cm, on a obtenu une progression du stimulus thermique supérieur à 100 mm/s pouvant atteindre 4000 mm/s et un échauffement de la zone de liaison 6 de 300°C en 1,4 seconde. La séparation a été effectuée en moins de 2 secondes. Cette durée n'est toutefois pas rédhibitoire pour des séparations d'étages, de sondes, etc. Il suffit en effet d'adapter les séquences de séparation et de propulsion en conséquence.

L'invention a été initialement développée pour s'appliquer à la séparation d'étages de lanceurs. Mais elle peut s'appliquer à tous les cas où l'on a des séparations linéaires, par exemple dans le domaine du largage des satellites.

## Revendications

1. Dispositif de séparation linéaire douce d'une première pièce (2) et d'une seconde pièce (4), la première pièce (2) et la deuxième pièce (4) étant des pièces de lanceur spatial, de sonde spatiale, de satellite ou de missile, la première pièce (2) étant liée à la seconde pièce (4), comportant une source thermique (12) appliquée sur la première pièce (2) qui applique un stimulus thermique à la première pièce (2), de manière à désolidariser la première pièce (2) de la seconde pièce (4) par une déformation thermique de la première pièce (2), **caractérisé en ce que** la première pièce (2) est liée linéairement selon une ligne à la seconde pièce (4) et **en ce que** la source thermique (12) est appliquée linéairement selon une ligne sur la première pièce (2).

2. Dispositif de séparation selon la revendication 1, **caractérisé en ce que** la source thermique (12) est placée dans une cavité (14) étanche aux gaz possédant des côtés comportant une isolation thermique (26, 28) sur au moins deux côtés de la cavité (4).

3. Dispositif de séparation selon la revendication 2, **caractérisé en ce que** l'isolation thermique (26, 28) est faite avec des matériaux à diffusivité la plus faible possible, la diffusivité étant la grandeur λ/ρ.Cₚ dans laquelle λ est la conductivité du matériau, ρ sa masse volumique et Cₚ sa capacité calorifique.

4. Dispositif de séparation selon la revendication 3, **caractérisé en ce que** l'isolation thermique (26, 28) est réalisée en mica.

5. Dispositif de séparation selon l'une quelconque des revendications 1 à 4, **caractérisé en ce que** la source thermique (12) est une composition chimique chauffante.

6. Dispositif de séparation selon la revendication 5, **caractérisé en ce que** la composition chimique chauffante (12) est une Thermite commerciale ayant un pouvoir calorifique au moins égal à 850 cal/g.

7. Dispositif de séparation selon l'une quelconque des revendications 1 à 6, **caractérisé en ce que** la désolidarisation de la première pièce (2) et de la seconde pièce (4) s'effectue en une durée inférieure à 10 secondes.

8. Dispositif de séparation selon l'une quelconque des revendications 1 à 6, **caractérisé en ce que** la désolidarisation de la première pièce (2) et de la seconde pièce (4) s'effectue en une durée inférieure à 3 secondes.

9. Dispositif de séparation selon la revendication 1, **caractérisé en ce que** la première pièce (2) est une pièce de révolution et **en ce que** la seconde pièce (4) est un cylindre lié linéairement à la première pièce par des pions (8) espacés l'un de l'autre, par collage démontable ou par brasure.

10. Dispositif selon la revendication 9, **caractérisé en ce que** la première pièce (2) comporte des entures (24) destinées à faciliter sa déformation.

11. Procédé de séparation linéaire douce (12) d'une première pièce (2) et d'une seconde pièce (4) au moyen d'un dispositif de séparation linéaire douce selon l'une quelconque des revendications 1 à 10, la première pièce (2) étant liée linéairement à la seconde pièce (4), **caractérisé par** les étapes successives suivantes :
- on applique une source thermique (12) sur la première pièce (2),
- on chauffe la première pièce (2) au moyen de la source thermique (12) de manière à la déformer thermiquement et à la désolidariser de la seconde pièce (4).

12. Procédé selon la revendication 11, dans lequel la première pièce (2) est une pièce de révolution et la seconde pièce (4) est un cylindre lié linéairement à la première pièce par des pions (8) espacés l'un de l'autre, par collage démontable ou par brasure.

## Patentansprüche

1. Vorrichtung zur sanften linearen Trennung eines ersten Teils (2) und eines zweiten Teils (4), wobei das erste Teil (2) und das zweite Teil (4) Teile einer Trägerrakete, einer Raumsonde, eines Satelliten oder einer Rakete sind, und wobei das erste Teil (2) mit dem zweiten Teil (4) verbunden ist, umfassend eine thermische Quelle (12), die an dem ersten Teil (2) angebracht ist und eine thermische Anregung auf das erste Teil (2) ausübt, sodass das erste Teil (2) von dem zweiten Teil (4) mittels thermischer Verformung des ersten Teils (2) getrennt wird,
**dadurch gekennzeichnet, dass** das erste Teil (2) linear entlang einer Linie mit dem zweiten Teil (4) verbunden ist und dass die thermische Quelle (12) linear entlang einer Linie auf dem ersten Teil (2) angebracht ist.

2. Vorrichtung zur Trennung gemäß Anspruch 1, **dadurch gekennzeichnet, dass** sich die thermische Quelle (12) in einem gasdichten Hohlraum (14) befindet, dessen Seiten auf mindestens zwei Seiten des Hohlraums (4) eine thermische Isolierung (26, 28) aufweisen.

3. Vorrichtung zur Trennung gemäß Anspruch 2, **dadurch gekennzeichnet, dass** die thermische Isolierung (26, 28) aus einem Material mit kleinstmöglicher Leitfähigkeit hergestellt ist, wobei die Leitfähigkeit durch die Größe **λ/**ρ**.C_{P}** gegeben ist, wobei **λ** die Wärmeleitfähigkeit des Materials, **ρ** die Dichte und **C_{P}** die Wärmekapazität ist.

4. Vorrichtung zur Trennung gemäß Anspruch 3, **dadurch gekennzeichnet, dass** die thermische Isolierung (26, 28) mit Glimmer (Schichtsilikat) erzielt wird.

5. Vorrichtung zur Trennung gemäß einem der Ansprüche 1 bis 4, **dadurch gekennzeichnet, dass** die thermische Quelle (12) eine Wärme erzeugende chemische Zusammensetzung ist.

6. Vorrichtung zur Trennung gemäß Anspruch 5, **dadurch gekennzeichnet, dass** die Wärme erzeugende chemische Zusammensetzung handelsübliches Thermit ist, das einen Heizwert von mindestens 850 Kal/g hat.

7. Vorrichtung zur Trennung gemäß einem der Ansprüche 1 bis 6, **dadurch gekennzeichnet, dass** die Trennung des ersten Teils (2) von dem zweiten Teil (4) in einem Zeitraum von unter 10 Sekunden erfolgt.

8. Vorrichtung zur Trennung gemäß einem der Ansprüche 1 bis 6, **dadurch gekennzeichnet, dass** die Trennung des ersten Teils (2) von dem zweiten Teil (4) in einem Zeitraum von unter 3 Sekunden erfolgt.

9. Vorrichtung zur Trennung gemäß Anspruch 1, **dadurch gekennzeichnet, dass** das erste Teil (2) ein Rotationsteil und das zweite Teil (4) ein Zylinder ist, der mit dem ersten Teil linear mittels Stiften (8), die im Abstand zueinander angeordnet sind, durch lösbare Klebung oder Lötung verbunden ist.

10. Vorrichtung gemäß Anspruch 9, **dadurch gekennzeichnet, dass** das erste Teil (2) Schlitze (24) aufweist, um seine Verformung zu erleichtern.

11. Verfahren der sanften linearen Trennung (12) eines ersten Teils (2) und eines zweiten Teils (4) mithilfe einer Vorrichtung zur sanften linearen Trennung gemäß einem der Ansprüche 1 bis 10, wobei das erste Teil (2) linear mit dem zweiten Teil (4) verbunden ist, **gekennzeichnet durch** die folgenden aufeinanderfolgenden Schritte:
- Anbringen einer thermische Quelle (12) an dem ersten Teil (2),
- Erhitzen des ersten Teils (2) wird mithilfe der thermischen Quelle (12), um es thermisch zu verformen und von dem zweiten Teil (4) zu trennen.

12. Verfahren nach Anspruch 11, bei dem das erste Teil (2) ein Rotationsteil und das zweite Teil (4) ein Zylinder ist, der mit dem ersten Teil linear mittels Stiften (8), die im Abstand zueinander angeordnet sind, durch lösbare Klebung oder Lötung verbunden ist.

## Claims

1. A separation device for smooth linear separation between a first part (2) and a second part (4), the first part (2) and the second part (4) being parts of a space launcher, a space probe, a satellite or a missile, the first part (2) being connected to the second part (4), comprising a heat source (12) applied onto the first part (2) that applies a heat stimulus to the first part (2), so as to separate the first part (2) from the second part (4) by thermal deformation of the first part (2), **characterised in that** the first part (2) is linearly connected along a line to the second part (4) and **in that** the heat source (12) is applied linearly along a line onto the first part (2).

2. The separation device according to claim 1, **characterised in that** the heat source (12) is placed in a gas tight cavity (14) with sides comprising thermal insulation (26, 28) on at least two sides of the cavity (4).

3. The separation device according to claim 2, **characterised in that** the thermal insulation (26, 28) is made with materials with the lowest possible diffusivity, the diffusivity being the magnitude λ/ρ.Cₚ in which λ is the conductivity of the material, ρ is its density and Cₚ is its calorific capacity.

4. The separation device according to claim 3, **characterised in that** the thermal insulation (26, 28) is made of mica.

5. The separation device according to any one of claims 1 to 4, **characterised in that** the heat source (12) is a heating chemical composition.

6. The separation device according to claim 5, **characterised in that** the heating chemical composition (12) is a commercial Thermite with a calorific value of at least 850 cal/g.

7. The separation device according to any one of claims 1 to 4, **characterised in that** the first part (2) is separated from the second part (4) within a time less than 10 seconds.

8. The separation device according to any one of claims 1 to 4, **characterised in that** the first part (2) is separated from the second part (4) within a time less than 3 seconds.

9. The separation device according to claim 1, **characterised in that** the first part (2) is an axisymmetric part and **in that** the second part (4) is a cylinder linearly connected to the first part by pins (8) at a spacing from each other, by detachable gluing or by brazing.

10. The separation device according to claim 9, **characterised in that** the first part (2) comprises splices (24) that will facilitate its deformation.

11. A soft linear method (12) for separating a first part (2) from a second part (4) by a separation device according to any one of claims 1 to 10, the first part (2) being linearly connected to the second part (4), **characterised by** the following successive steps:
- a heat source (12) is applied onto the first part (2),
- the first part (2) is heated by means of the heat source (12) so as to be deformed by it thermally and to separate from the second part (4).

12. The method according to claim 11, in which the first part (2) is preferably an axisymmetric part and the second part (4) is a cylinder linearly connected to the first part by pins (8) at a spacing from other, or by detachable gluing or brazing.
